Europäisches Patentamt

European Patent Office

Office européen des brevets

(11) Veröffentlichungsnummer: **0 297 396 B1**

(12) **EUROPÄISCHE PATENTSCHRIFT**

(45) Veröffentlichungstag der Patentschrift: **08.09.93**

(51) Int. Cl.5: **B32B 15/08**, B60R 27/00, C08F 299/02, C08J 5/12

(21) Anmeldenummer: **88109834.7**

(22) Anmeldetag: **21.06.88**

(54) **Blech-Duroplast Verbundteile,Verfahren zu ihrer Herstellung und ihre Verwendung beim Bau von Fahrzeugen.**

(30) Priorität: **02.07.87 DE 3721849**

(43) Veröffentlichungstag der Anmeldung:
**04.01.89 Patentblatt 89/01**

(45) Bekanntmachung des Hinweises auf die Patenterteilung:
**08.09.93 Patentblatt 93/36**

(84) Benannte Vertragsstaaten:
**CH DE ES FR GB IT LI SE**

(56) Entgegenhaltungen:
**EP-A- 0 182 642**
**DE-A- 2 003 818**

(73) Patentinhaber: **DSM N.V.**
**Het Overloon 1**
**NL-6411 TE Heerlen(NL)**

(72) Erfinder: **Uerdingen, Walter, Dr.**
**Humperdinckstrasse 41**
**D-5090 Leverkusen 1(DE)**
Erfinder: **Brassat, Bert, Dr.**
**Bodelschwinghstrasse 30**
**D-4150 Krefeld 1(DE)**
Erfinder: **Noble, Karl-Ludwig, Dr.**
**Gerstenkamp 12**
**D-5000 Köln 80(DE)**
Erfinder: **Hess, Bernhard, Dr.**
**Kaldenhausener Strasse 84**
**D-4130 Moers 2(DE)**
Erfinder: **Müller, Heino**
**Wilhelm-Leuschner-Strasse 17**
**D-5090 Leverkusen 1(DE)**
Erfinder: **Eichner, Heinz, Dipl.-Ing**
**Adolf-Wagner-Strasse 36**
**D-4050 Mönchen-Gladbach(DE)**

**Beschreibung**

Die Erfindung betrifft ein Verfahren zur Herstellung von Verbundteilen aus korrosionsgeschütztem Blech und Formmassen auf Basis ungesättigter Polyesterharze mit hervorragender Haftung, derart hergestellte Verbundteile und ihre Verwendung beim Bau von Fahrzeugen, insbesondere als Karossierieteile.

Blech/Kunststoff-Verbundteile weisen Vorteile beider Werkstoffklassen auf. Die aus Blech bestehende Oberfläche ist glatt, hart, verformungssteif, frei von Einfallstellen und Wellen sowie problemlos lackierbar. Ihre elektrische Leitfähigkeit ist in vielen Fällen erwünscht. Vorteile des Kunststoffs sind u. a. geringes Gewicht, Korrosionsbeständigkeit, Vibrations- und Geräuschdämpfungsvermögen, Wärmeisolierfähigkeit und einfache und kostengünstige Formgebung auch bei komplizierter Gestaltung.

Blech/Kunststoff-Verbundteile eignen sich deshalb für viele Einsatzzwecke, z. B. zur Herstellung von Möbelteilen oder Gerätegehäusen, insbesondere jedoch zur Verwendung als Außenhaut für Kraftfahrzeuge; vgl. FR-PS 1 567 839, DE-OS 23 15 161.

Bei der Fabrikation solcher Teile kann man zum Beispiel Blech- und Kunststoffteil gesondert herstellen und anschließend miteinander verkleben. Die separate Formung und Handhabung von Blech- und Kunststoffteil sowie das Verkleben erfordern jedoch mehrere Arbeitsgänge, deren Anzahl man aus Rationalisierungsgründen gerne vermindern möchte. Möglichkeiten hierzu werden u. a. in den FR-PS 1 296 103 und 2 479 123 beschrieben. Der Kunststoff wird hier auf das Blech direkt aufgespritzt oder aufgepreßt, wobei eine feste Verbindung entweder durch mechanische Verankerung (Umspritzen der Blechränder, Hinterschneidungen) oder durch vorher auf das Blech aufgebrachte Haftvermittler zustandekommt. Eine weitere Rationalisierung kann darin bestehen, daß man die Formgebung des Bleches durch Tiefziehen und das Hinterpressen mit Kunststoff innerhalb der gleichen Werkzeugmatrize durchführt (EP-A 170 819).

Zur Herstellung von solchen Verbundteilen eignen sich am besten solche Kunststoffe, deren thermischer Ausdehnungskoeffizient sich in dem Temperaturintervall, das die Teile bei ihrer Herstellung und im späteren Gebrauch durchlaufen, möglichst wenig von dem des verwendeten Blechs unterscheidet. Stahl- und Aluminiumblech haben lineare Ausdehnungskoeffizienten von ca. 11 bzw. ca. 24 • $10^{-6}$ $K^{-1}$. Ungefüllte und unverstärkte Kunststoffe weisen je nach Aufbau Werte zwischen etwa 60 und 120 • $10^{-6}$ $K^{-1}$ auf. Ihre Verwendung bei der Herstellung solcher Verbundkörper hat eine Reihe von Nachteilen zur Folge, vor allem das Durchbiegen bei Temperaturänderung ("Bimetall-Effekt") sowie den allmählichen Verlust der Verbundhaftung bei Temperaturwechselbelastung ("Arbeiten" des Teils). Beides kann zur Unbrauchbarkeit der Teile führen.

Aus hochgefüllten verstärkten Formmassen auf Basis ungesättigter Polyesterharze durch Härtung hergestellte duroplastische Teile haben demgegenüber lineare thermische Ausdehnungskoeffizienten von etwa 10 bis 25 • $10^{-6}$ $K^{-1}$. Man kann deshalb von ihnen ein günstigeres Verhalten erwarten. Hinzu kommt, daß sich ungesättigte Polyesterharze durch Zusatz sogenannter Low-Profile-Additive so einstellen lassen, daß sie schrumpffrei gehärtet werden können und damit nach dem Erkalten frei von inneren Spannungen, Einfallstellen und Wellen sind. Die Verwendung von Formmassen dieser Art gewährleistet deshalb ein besonders gutes Aussehen der Verbundteile (EP-A 119 131).

Praktische Versuche haben nun gezeigt, daß Formmassen auf Basis ungesättigter Polyesterharze üblicher Zusammensetzung auf unbehandelten oder in herkömmlicher Weise vorbehandelten Blechen nach der Härtung unzureichend haften. Dabei ist es unerheblich, ob es sich um Eisenoder Aluminiumblech handelt und nach welcher der üblichen Methoden - beispielsweise Zinkphosphatierung oder Zinkchromatierung -es vorbehandelt ist. Dies gilt auch dann, wenn das Blech als Korrosionsschutz eine nach dem Coil-Coating-Verfahren aufgebrachte Lackschicht gebräuchlicher Zusammensetzung trägt.

Es ist also bis heute nicht möglich gewesen, zum Zweck einer ausreichend festen Verbindung zwischen Kunststoff und Blech auf Maßnahmen zu verzichten, wie sie oben beschrieben sind, z. B. auf das Anbringen von Hinterschneidungen oder auf das gesonderte Auftragen eines Haftvermittlers auf das Blech. Die Notwendigkeit derartiger zusätzlicher Maßnahmen stellt auch eine wesentlichen technischen Nachteil dar: Das Anbringen von Hinterschneidungen bedeutet eine Einschränkung der konstruktiven Möglichkeiten sowie zusätzlichen Aufwand bei Konstruktion und Verarbeitung. Das gesonderte Auftragen eines Haftvermittlers erfordert einen zusätzlichen Arbeitsgang; resultierende klebrige Oberflächen können die Handhabung des Bleches erschweren.

Aufgabe der Erfindung war daher das Bereitstellen von Verbundteilen aus Blech und Formassen auf Basis ungesättigter Polyesterharze mit guter Verbundhaftung und eines Verfahrens zu ihrer Herstellung, die die Nachteile des Standes der Technik nicht aufweisen sollten.

Überraschenderweise wurde gefunden, daß diese Aufgabe durch die Verwendung bestimmter Formmassen und durch die Verwendung von Blechen mit speziell abgestimmter Beschichtung gelöst werden konnte.

Gegenstand der Erfindung ist somit ein Verfahren zur Herstellung von Blech-Duroplast-Verbundteilen aus korrosionsgeschütztem Blech und einer Formmasse auf Basis von ungesättigtem Polyesterharz, wobei die Formmasse nach der Formgebung des Bleches auf dieses durch Aufpressen und Härten bei erhöhter Temperatur in einem Arbeitsgang (d. h. ohne Zwischenschaltung einer speziellen Oberflächenbehandlung oder eines Kleberauftrags nach der Formgebung des Bleches) aufgebracht wird, dadurch gekennzeichnet, daß

1. das der Formmasse zugrundeliegende ungesättigte Polyesterharz Polyepoxide in einer Menge entsprechend 5 bis 200, vorzugsweise 15 bis 110, insbesondere 35 bis 90 mMol Epoxidgruppen pro 100 g organisches Bindemittel der Formmasse und/oder deren Umsetzungsprodukte mit $\alpha,\beta$-ethylenisch ungesättigten, unter Härtungsbedingungen copolymerisierbaren Mono-oder Dicarbonsäuren zugemischt enthält, wobei diese Mono- und Dicarbonsäuren Molekulargewichte unter 800, vorzugsweise unter 500, insbesondere unter 300 besitzen, und

2. das Blech durch eine Einbrennlackierung korrosionsgeschützt ist und auf der Seite, auf welche die Polyesterharzformmasse aufgebracht wird, eine haftvermittelnde Beschichtung trägt, die

a) Polyepoxide in einer Menge entsprechend 5 bis 200, vorzugsweise 10 bis 120, insbesondere 10 bis 80, mVal Epoxidgruppen pro 100 g organisches Bindemittel dieser Beschichtung, und/oder

b) Umsetzungsprodukte der Polyepoxide a) mit $\alpha,\beta$-ethylenisch ungesättigten, unter Härtungsbedingungen copolymerisierbaren Mono- oder Dicarbonsäuren, wobei diese Mono- bzw. Dicarbonsäuren Molekulargewichte unter 800, vorzugsweise unter 500, insbesondere unter 300, besitzen und/oder

c) 2,5 bis 50, vorzugsweise 5 bis 40, insbesondere 5 bis 30 Gew.-%, bezogen auf organisches Bindemittel dieser Beschichtung, ungesättigten Polyester mit 0,1 bis 0,6, vorzugsweise 0,2 bis 0,4, Äquivalenten copolymerisierbarer ethylenischer Doppelbindungen pro 100 g ungesättigtem Polyester c)

enthält.

Weiterer Gegenstand der Erfindung sind nach diesem Verfahren hergestellte Verbundteile und ihre Verwendung beim Bau von Fahrzeugen.

Die Formmasse 1

Unter ungesättigten Polyesterharzen versteht man Mischungen $\alpha,\beta$-ethylenisch ungesättigter Polyester und mit diesen copolymerisierbarer Monomerer, die in der Regel

A. 30 bis 80 Gew.-% ungesättigten Polyester und

B. 70 bis 20 Gew.-% copolymerisierbares Monomer

enthalten.

$\alpha,\beta$-Ethylenisch ungesättigte Polyester A im Sinne der Erfindung sind die üblichen Polykondensationsprodukte mindestens einer $\alpha,\beta$-ethylenisch ungesättigten Dicarbonsäure mit in der Regel 4 bis 6 C-Atomen oder deren esterbildener Derivate, gegebenfalls in Abmischung mit bis zu 200 Mol-%, bezogen auf ungesättigte Dicarbonsäurekomponente, einer oder mehrerer Dicarbonsäuren mit 4 bis 20 C-Atomen, die keine radikalisch polymerisierbaren Doppelbindungen enthalten (oder deren esterbildender Derivate), mit mindestens einer Polyhydroxylverbindung, insbesondere Dihydroxylverbindung, mit 2 bis 30, vorzugsweise 2 bis 8, C-Atomen - also Polyester, wie sie bei J. Björksten et al., "Polyesters and their Applications", Reinhold Publishing Corp., New York, 1956, beschrieben sind.

Beispiele für bevorzugt zu verwendende ungesättigte Dicarbonsäuren oder ihre Derivate sind Maleinsäure oder Maleinsäureanhydrid und Fumarsäure. Verwendet werden können z. B. jedoch auch Mesacon-, Citracon-, Itacon-oder Chlormaleinsäure.

Dicarbonsäuren, die keine radikalisch polymerisierbaren Doppelbindungen enthalten, können aliphatische gesättigte Dicarbonsäuren mit 4 bis 10 C-Atomen, cycloaliphatische und aromatische Dicarbonsäuren mit 8 bis 10 C-Atomen umfassen. Bevorzugt zu verwendende Dicarbonsäuren, die keine radikalisch polymerisierbaren Doppelbindungen enthalten, sind Phthalsäure, Isophthalsäure, Terephthalsäure, Hexa- und Tetrahydrophthalsäure, Endomethylentetrahydrophthalsäure, Bernsteinsäure, Glutarsäure, Adipinsäure, Sebacinsäure, Hexachlorendomethylentetrahydrophthalsäure, Tetrachlorphthalsäure, Hexachlor- und Tetrabromphthalsäure. Bevorzugt zu verwendende Polyester enthalten Maleinsäurereste, die bis zu 20 Mol-% durch Phthalsäure- oder Isophthalsäurereste ersetzt sein können. Unter esterbildenden Derivaten sind Ester (insbesondere solche mit niedrig siedenden einwertigen Alkoholen wie Methyl- oder Ethylalkohol), ferner Säureanhydride und Säurehalogenide zu verstehen.

Bevorzugte zweiwertige Alkohole sind Ethylenglykol, Propandiol-1,2 und Propandiol-1,3, Diethylenglykol, Dipropylenglykol, Butandiol-1,3, Butandiol-1,4, Neopentylglykol, 2-Ethyl-propandiol-1,3, Hexandiol-1,6, cycloaliphatische Diole wie Perhydrobisphenol-A, bis-oxalkylierte Bisphenole wie beispielsweise bis-oxethyliertes Bisphenol-A.

Insbesondere verwendet werden Ethylenglykol, Propandio-1,2, Diethylenglykol, Dipropylenglykol und Neopentylglykol.

Die Säurezahlen der Polyester A können zwischen 0 und 100, bevorzugt zwischen 0 und 50, die OH-Zahlen zwischen 0 und 150, vorzugsweise zwischen 20 und 100, und die als Zahlenmittel bestimmten Molekulargewichte $M_n$ zwischen ca. 500 und 5.000, vorzugsweise zwischen ca. 1.000 und 3.000. liegen (dampfdruckosmometrisch gemessen in Dioxan und Aceton; bei differierenden Werten wird der niedrigere als der korrekte angesehen).

Als mit Polyester A copolymerisierbare Monomere B eignen sich in der Polyestertechnologie gebräuchliche ungesättigte Verbindungen, die bevorzugt $\alpha$-substituierte Vinylgruppen oder $\beta$-substituierte Allylgruppen tragen, insbesondere unsubstituiertes Styrol selbst, aber auch beispielsweise kernchlorierte, -alkylierte und -alkenylierte Styrole, wobei die Alkyl- bzw. Alkenylgruppen 1 bis 4 Kohlenstoffatome enthalten können, wie z. B. Vinyltoluol, Divinylbenzol, $\alpha$-Methylstyrol, tert.-Butylstyrole, Chlorstyrole, Allylvinylbenzol; Vinylester von Carbonsäuren mit 2 bis 6 Kohlenstoffatomen, bevorzugt Vinylacetat; Vinylpyridin, Vinylnaphthalin, Vinylcyclohexan; Acrylsäure und Methacrylsäure und ihre Ester mit gesättigten oder ungesättigten Alkoholen mit 1 bis 4 Kohlenstoffatomen wie (Meth-) Acrylsäuremethyl-, -ethyl-, -butyl-, -vinyl-, -allyl-, -methallyl- und -vinylester, ferner ihre Amide und Nitrile; Malein-, Citracon-, Mesacon- und Fumarsäure und ihre Halb- und Diester mit 1 bis 4 Kohlenstoffatomen in der Alkoholkomponente, ihre (gegebenenfalls substituierten) Halb- und Diamide, ferner cyclische Derivate der Malein- und Citaconsäure wie Maleinsäureanhydrid und cyclische Imide wie N-Methyl-, N-Phenyl- und N-Cyclohexyl-maleinimid; Allylverbindungen wie Allylbenzol und Allylester wie Allylacetat, Diallylphthalat, Diallylisophthalat, Diallylfumarat, Diallylcarbonat, Triallylphosphat, Triallylcyanurat. Besonders bevorzugt sind Styrol und seine Kernsubstitutionsprodukte.

Die Formmassen 1 können neben ungesättigtem Polyesterharz natürlich auch schwundvermindernde Zusätze, wie sie beispielsweise in den DE-PS 12 41 983, 16 94 657 und 19 53 062 beschrieben werden, enthalten. Bevorzugte schwundvermindernde Zusätze sind beispielsweise Polymerisate von Acryl- und Methacrylsäureestern wie Polymethylmethacrylat und Polyethylacrylat, Homo- und Copolymerisate von Vinylverbindungen wie Polystyrol und Polyvinylacetat, Celluloseester wie Celluloseacetat-propionat und -butyrat, wobei die Molekulargewichte zwischen 10.000 und 10.000.000 liegen können. Auch Substanzen mit geringerem Molekulargewicht, die bei Raumtemperatur flüssig bis harzartig und deshalb keine "Thermoplasten" im klassischen Sinne sind, sondern den Charackter von Weichmachern haben, sind als schwundvermindernde Zusätze empfohlen worden (AT-PS 220 369), so z. B. Dibutylphthalat und Polypropylenadipat. Außerdem sind Kombinationen aus beiden Stoffgruppen als vorteilhaft beschrieben worden (DE-OS 34 26 425).

Schwundvermindernde Zusätze werden in der Regel in Mengen von 5 bis 25, vorzugsweise 8 bis 20, Gew.-%, bezogen auf die Summe von ungesätigtem Polyesterharz und schwundverminderndem Zusatz, verwendet.

Die Formmassen 1 können neben ungesättigtem Polyesterharz bis zu 400, vorzugsweise 30 bis 200, Gew.-%, bezogen auf die Summe von ungesättigtem Polyesterharz und schwundverminderndem Zusatz, Verstärkungsmittel enthalten. Als solche eignen sich insbesondere faserförmige Materialien, wie z. B. anorganische Fasern wie Metall-, Asbest-, Kohlenstoff- und Glasfasern, ferner organische Fasern wie Baumwoll-, Polyamid-, Polyester- und Polyacrylnitrilfasern. Bevorzugt werden Glas-, Kohlenstoff-und Aramidfasern.

Die Formmassen 1 können neben ungesättigtem Polyesterharz bis zu 300, vorzugsweise 30 bis 150, Gew.-%, bezogen auf die Summe von ungesättigtem Polyesterharz und schwundverminderndem Zusatz, (nicht-verstärkender) Füllstoffe, wie z. B. Kreide, Talkum, Quarz- und Schiefermehl, Kaolin, Kalkspat, Dolomit, Glimmer, Schwerspat, Kieselgur, Tonerde, Aluminiumoxidhydrat, Glaskugeln oder Kohlenstaub enthalten.

Zum Schutz vor vorzeitiger Polymerisation des ungesättigten Polyesterharzes können die Formmassen 1 Polymerisationsinhibitoren in Konzentrationen von 0,001 bis 1, vorzugsweise 0,01 bis 0,5, Gew.-%, bezogen auf ungesättigtes Polyesterharz A + B, enthalten. Bevorzugte Polymerisationsinhibitoren sind z. B. ein- und mehrwertige Phenole wie Hydrochinon, Toluhydrochinon, 4-tert.-Butylbrenzkatechin, 2,6-Di-tert.-butyl-p-kresol, Naphthohydrochinon, ferner Chinone wie p-Benzochinon, Chloranil, Naphthochinon, ebenso wie Amine, vorzugsweise sekundäre Arylamine und ihre Derivate, Kupfersalze organischer Säuren, Anlagerungsverbindungen von Kupfer(I)-halogeniden an Phosphite. Diese und weitere bevorzugte Inhibitoren sind beschrieben in Houben-Weyl, "Methoden der Organischen Chemie", 4. Aufl., Band XIV/1, S. 433-453, Georg Thieme Verlag, Stuttgart, 1961.

Als Polymerisationsinitiatoren enthalten die Formmassen 1 im allgemeinen 0,1 bis 3, vorzugsweise 0,5 bis 2, Gew.-%, bezogen auf die Summe von ungesättigtem Polyesterharz und schwundverminderndem Zusatz, zur Initiierung der Copolymerisation von ungesättigtem Polyester A und Monomer B befähigter Radikalbildner. Bevorzugte Beispiele solcher Radikalbildner sind Peroxide, insbesondere Diacylperoxide wie Dibenzoylperoxid und Di-p-chlor-benzoyl-peroxid; Peroxyester wie tert.-Butyl-peroxybenzoat, tert.-Butyl-peroctoat, Dicyclohexylperoxydicarbonat; Alkylperoxide wie Bis-(tert.-butyl-peroxy-)butan, Dicumylperoxid, tert.-Butyl-cumyl-peroxid; Hydroperoxide wie Cumolhydroperoxid, tert.-Butyl-hydroperoxid, Cyclohexanonhydroperoxid, Methylethylketonhydroperoxid; Perketale; Ketonperoxide wie Acetylacetonperoxid.

Bevorzugt sind ferner peroxidfreie Verbindungen, die unter Aufspaltung einer C-C-Bindung Radikale bilden, z. B. Benzpinakol-silylether (beschrieben u. a. in Kunststoffe 68 (1978) Nr. 9, S. 553-555).

Übliche weitere Zusatzstoffe für die Formmassen 1 sind z. B. Pigmente, Farbstoffe, Eindickungsmittel, Gleit-und Trennmittel wie Zinkstearat, Flammschutzmittel, UV-Absorber und Stabilisatoren gegen thermischen Abbau.

Als haftungsvermittelnde Komponente enthalten die Formmassen 1 erfindungsgemäß Polyepoxide oder deren Umsetzungsprodukte mit ungesättigten Mono- oder Dicarbonsäuren. Polyepoxide im Sinne der Erfindung umfassen aliphatische, cycloaliphatische, aromatische und heterocyclische Verbindungen, die durchschnittlich mehr als 1 1,2-Epoxidgruppe, vorzugsweise mehr als 1,5 1,2-Epoxidgruppen, pro Molekül enthalten. Bevorzugte Polyepoxide besitzen Molekulargewichte unter 2.000 (im Falle von Mischungen von Verbindungen mit unterschiedlichen Molekulargewichten als Zahlenmittel bestimmt).

Bevorzugte Polyepoxide umfassen Polyepoxidverbindungen, vorzugsweise Polyglycidylether, auf Basis mehrwertiger Phenol, beispielsweise aus Brenzkatechin, Resorcin, Hydrochinon, aus 4,4'-Dihydroxydiphenylmethan, aus 4,4'-Dihydroxy-3,3'-dimethyl-diphenylmethan, aus 4,4'-Dihydroxydiphenyldimethylmethan (Bisphenol A), aus 4,4'-Dihydroxydiphenylmethylmethan, aus 4,4'-Dihydroxydiphenylcyclohexan, aus 4,4'-Dihydroxy-3,3'-dimethyldiphenylpropan, aus 4,4'-Dihydroxydiphenyl, aus 4,4'-Dihydroxydiphenylsulfon, aus Tris-(4-hydroxyphenyl)-methan, aus den Chlorierungs- und Bromiergungsprodukten der vorstehend genannten Diphenole, insbesondere aus Bisphenol A; aus Novolaken (d.h. aus Umsetzungsprodukten von ein-oder mehrwertigen Phenolen mit Aldehyden, insbesondere Formaldehyd, in Gegenwart saurer Katalysatoren), aus Diphenolen, die durch Veresterung von 2 Mol des Natriumsalzes einer aromatischen Hydroxycarbonsäure mit einem Mol eines Dihalogenalkans oder Dihalogendialkylethers erhalten wurden (vgl. GB-PS 1 017 612), aus Polyphenolen, die durch Kondensation von Phenolen und langkettigen, mindestens 2 Halogenatome enthaltenden Halogenparaffinen erhalten wurden (vgl. GB-PS 1 024 288).

Weiterhin seien genannt: Glycidylester mehrwertiger aromatischer, aliphatischer und cycloaliphatischer Carbonsäuren, die keine unter Härtungsbedingungen copolymerisierbaren Doppelbindungen enthalten, beispielsweise Phthalsäurediglycidylester, Adipinsäurediglycidylester, Hexahydrophthalsäurediglycidylester und Glycidylester von Umsetzungsprodukten aus 1 Mol eines aromatischen oder cycloaliphatischen Dicarbonsäureanhydrids und 1/2 Mol eines Diols oder 1/n Mol eines Polyols mit n Hydroxylgruppen pro Molekül.

Außerdem kommen Glycidylether mehrwertiger Alkohole in Frage, beispielsweise des 1,4-Butandiols, des Glycerins, Trimethylolpropans, des Pentaerythrits sowie von Polyethylenglykolen. Weiterhin sind Verbindungen mit an Heteroatome gebundenen Glycidylgruppen wie N,N'-Diglycidyloxamid oder Bis-glycidylmercaptomethyl-benzol von Interesse, ferner von Hydantoinen und Isocyanursäure abgeleitete Glycidylverbindungen.

Schließlich seien Epoxidierungsprodukte von mehrfach ungesättigten Verbindungen genannt, z. B. von vegetabilischen Ölen und deren Umwandlungsprodukten, von Di- und Polyolefinen wie Butadien, Vinylcyclohexen, 1,5,9-Cyclododecatrien, ferner von Polymerisaten und Mischpolymerisaten, die noch epoxidierbare Doppelbindungen enthalten, z. B. auf Basis von Polybutadien, Polyisopren, Butadien-Styrol-Mischpolymerisaten. Außerdem seien Polymerisate von ungesättigten Monoepoxiden genannt, beispielsweise von Methacrylsäureglycidylester oder von Allylglycidylether.

Bevorzugte Polyepoxide sind Bisphenol-A-diglycidylether und Umsetzungsprodukte von Bisphenol-A-diglycidylether mit Bisphenol A in einem derartigen Verhältnis, daß das Umsetzungsprodukt durchschnittlich mehr als eine 1,2-Epoxidgruppe pro Molekül enthält.

Bevorzugte Mono- und Dicarbonsäuren mit copolymerisierbaren Doppelbindungen, deren Umsetzungsprodukte mit den Polyepoxiden ebenso wie die Polyepoxide selbst eingesetzt werden können, sind vorzugsweise $C_3$-$C_5$-Mono- und $C_4$-$C_6$-Dicarbonsäuren, wie beispielsweise Acrylsäure, Methacrylsäure, Crotonsäure, Vinylessigsäure, Tiglinsäure, Maleinsäure, Fumarsäure, Citraconsäure, Mesaconsäure, Itaconsäure und Aconitsäure, Bevorzugt werden Acryl-, Methacryl-, Malein- und Fumarsäure. Bei Umsetzungsprodukten von Polyepoxiden mit Dicarbonsäuren beträgt das Verhältnis von Epoxid- zu Carboxylgruppen der Polyepoxide bzw. Dicarbonsäuren 0,4 bis 0,6, vorzugsweise ca. 1:2.

Zur Herstellung der Formmassen 1 werden vorzugsweise zunächst die flüssigen und löslichen Anteile mit Dissolvern, Rührwerken o. ä. gemischt. Die Compoundierung mit Füll- und Verstärkungsstoffen zu flächigen (SMC) oder teigartigen (BMC) Formmassen ist vielfältig beschreiben, z. B. im Kunststoff-Handbuch, Band VIII "Polyester", herausgegeben von R. Vieweg und L. Goerden, Carl-Hanser-Verlag, München 1973, S. 483 ff. und 491 ff. Die Formmassen werden üblicherweise bis zum Erreichen der notwendigen Viskosität gelagert und dann unter Formgebung und Härtung auf das Blech aufgeformt, vorzugsweise in beheizten Pressen oder in Spritzgießmaschinen.

Das beschichtete Blech 2

Der Korrosionsschutz der Bleche besteht aus einer Einbrennlackierung, die aus wirtschaftlichen Gründen vorzugsweise nach dem Coil-Coating-Verfahren aufgebracht wird. Man kann zwar auch so arbeiten, daß die der aufzubringenden Formmasse 1 zugewandte Beschichtung als einzige Schicht die Eigenschaften des Korrosionsschutzes und der Haftungsvermittlung in sich vereinigt. Für diesen Fall sind die Beschichtungen auf beiden Seiten des Bleches nahezu identisch und unterscheiden sich allein dadurch, daß die der aufzubringenden Formmasse 1 zugewandte Beschichtung die anspruchsgemäß definierten Komponenten a, b und/oder c zusätzlich enthält.

Bevorzugt wird aber ein Verfahren, wonach die haftvermittelnde Beschichtung auf das bereits korrosionsgeschützte Blech aufgebracht wird. In diesem Fall besteht die der aufzubringenden Formmasse 1 zugewandte Beschichtung aus mindestens 2 Schichten. Besonders bevorzugt wird eine 2-Schichten-Beschichtung, die aus der korrosionsschützenden Einbrennlackierung als erster Schicht und aus der haftvermittelnden Schicht als zweiter Schicht besteht. Für diese besonders bevorzugte Beschichtung hat es sich als außerordentlich vorteilhaft erwiesen, die Beschichtungsmittel für beide aufeinanderfolgende Schichten so zu wählen, daß sie nahezu identisch sind und sich lediglich dadurch unterscheiden, daß die zweite Schicht die anspruchsgemäß definierten Komponenten a, b und/oder c zusätzlich enthält.

Da beide Beschichtungsmittel nahezu identisch sind, läßt sich die Beschichtung mit dem haftvermittelnden Mittel auch auf analoge Weise bewerkstelligen, also vorzugsweise durch Einbrennen nach dem Coil-Coating-Verfahren.

Als Einbrennlackbindemittel eignen sich solche auf Basis von Alkydharzen, ölfreien Polyestern, Epoxidharzen, Acrylatharzen und vorzugsweise auf Basis von Polyurethanlacken. Verwendet werden - wie für Einbrennlackbindemittel üblich - Zweikomponentenharze, d. h. Mischungen aus unvernetzten reaktiven Harzen und Vernetzern, die mit den reaktiven Gruppen der unvernetzten Harze unter Ausbildung eines polymeren Netzwerks zu reagieren vermögen.

Bei den als Einbrennlackbindemittel geeigneten Alkydharzen handelt es sich vorzugsweise um Produkte, wie sie in (1) H. Wagner, H.F. Sarx, Lackkunstharze, Carl Hanser Verlag, München 1971, S. 86 ff. und in (2) Ullmanns Encyclopädie der technischen Chemie, 4. Aufl., Bd. 15, Verlag Chemie, Weinheim 1978, S. 616 ff, bei den geeigneten ölfreien Polyestern vorzugsweise um Produkte, wie sie in (1), S. 86 ff., und (2), S. 625 ff., bei den geeigneten Epoxidharzen vorzugsweise um Produkte, wie sie in (1), S. 174 ff und in (2), S. 637 und bei den geeigneten Acrylatharzen vorzugsweise um Produkte, wie sie in (1), S. 229 ff und in (2), S. 613 ff. beschreiben sind.

Besonders bevorzugt werden Polyurethanlacke als sogenannte "Eintopfsysteme" mit Bindemitteln aus

I) Polyisocyanaten mit durchschnittlich midestens 1,8, vorzugsweise mindestens zwei blockierten Isocyanatgruppen pro Molekül und

II) zur Reaktion mit Isocyanatgruppen befähigte H-Atome enthaltenden Polymeren.

Ausgangsmaterialien zur Herstellung der Komponente I sind:

(i) beliebige organische Polyisocyanate, vorzugsweise Diisocyanate der Formel

$$Q(NCO)_2$$

wobei Q einen aliphatischen Kohlenwasserstoffrest mit 4 bis 12 Kohlenstoffatomen, einen cycloaliphatischen Kohlenwasserstoffrest mit 6 bis 15 Kohlenstoffatomen, einen aromatischen Kohlenwasserstoffrest mit 6 bis 15 Kohlenstoffatomen oder einen araliphatischen Kohlenwasserstoffrest mit 7 bis 15 Kohlenstoffatomen bedeutet.

Beispiele derartiger bevorzugter Diisocyanate sind Tetramethylendiisocyanat, Hexamethylendiisocyanat, Dodecamethylendiisocyanat, 1,4-Diisocyanatocyclohexan, 3-Isocyanatomethyl-3,5,5-trimethylcyclohexylisocyanat ("Isophorondiisocyanat"), 4,4'-Diisocyanato-dicyclohexylmethan, 4,4'-Diisocyanato-dicyclohexylpropan-(2,2), 1,4-Diisocyanatobenzol, 2,4- und 2,6-Diisocyanatotoluol oder Gemische dieser Isomeren, 4,4'- oder 2,4'-Diisocyanato-diphenylmethan, 4,4'-Diisocyanato-diphenylpropan-(2,2), p-Xylylendiisocyanat und $\alpha,\alpha,\alpha',\alpha'$-Tetramethyl-m- oder -p-xylylendiisocyanat sowie diese Verbindungen enthaltende Gemische.

Es ist selbstverständlich auch möglich, die in der Polyurethanchemie an sich bekannten höherfunktionellen Polyisocyanate oder auch an sich bekannte modifizierte, beispielsweise Carbodiimidgruppen, Allophanatgruppen, Isocyanuratgruppen, Urethangruppen und/oder Biuretgruppen aufweisende Polyisocyanate (mit)zuverwenden. Beispiele derartiger höherfunktioneller Polyisocyanate sind Tris-(6-isocyanatohexyl)-biuret, gegebenenfalls im Gemisch mit seinen höheren Homologen, Tris-(6-isocyanatohexyl-)isocyanurat, gegbenenfalls im Gemisch mit seinen höheren Homologen, wie es beispielsweise gemäß DE-OS 28 39 133 durch Trimerisieren von Hexamethylendiisocyanat zugänglich ist, sowie weitere durch Trimerisieren von aliphatischen und/oder aromatischen Diisocyanaten, wie z. B. "Isophorondiisocyanat", Diisocyanatotoluol und Hexamethylendiisocyanat erhältliche, Isocyanuratgruppen aufweisende Polyisocyanate, wie sie zum bekannten Stand der Technik gehören. Sehr gut einsetzbare Polyisocyanate sind auch die an sich bekannten Urethangruppen aufweisenden Polyisocyanate, wie sie beispielsweise durch Umsetzung von überschüssigen Mengen an 2,4-Diisocyanatotoluol oder an "Isophorondiisocyanat" mit einfachen mehrwertigen Alkoholen im Molekulargewichtsbereich 62 bis 300, insbesondere mit Trimethylolpropan, und anschließend destillative Entfernung des nicht umgestezten Diisocyanatüberschusses erhalten werden können.

Bei der Mitverwendung von monofunktionellen Polyisocyanaten ist ihre Menge vorzugsweise so zu bemessen, daß die unten angegebene minimale Funktionalität der resultierenden blockierten Polyurethan-Prepolymeren nicht unterschritten wird.

(ii) Polyether- und/oder Polyesterpolyole der in der Polyurethanchemie an sich bekannten Art, vorzugsweise Polyether- und Polyesterdiole mit Molekulargewichten von 300 bis 2.000. Die in Frage kommenden Hydroxylgruppen aufweisenden Polyether werden z. B. durch Polyaddition von cyclischen Ethern wie vorzugsweise Propylenoxid oder auch Butylenoxid, Tetrahydrofuran, Styroloxid und/oder Epichlorhydrin mit sich selbst, z. B. in Gegenwart von Bortrifluorid, oder durch Anlagerung dieser Verbindungen, gegebenenfalls im Gemisch oder nacheinander, an Startkomponenten mit reaktionsfähigen Wasserstoffatomen wie Alkohole und Amine, z. B. Wasser, Ethylenglykol, Propylenglykol-(1,3) oder -(1,2), Bisphenol-A oder Anilin hergestellt.

Die in Frage kommenden Hydroxylgruppen aufweisenden Polyester sind z. B. Umsetzungsprodukte von vorzugsweise mehrwertigen, besonders bevorzugt zweiwertigen und gegebenenfalls zusätzlich dreiwertigen Alkoholen mit vorzugsweise mehrbasischen, besonders bevorzugt zweibasischen Carbonäuren. Anstelle der freien Carbonsäuren können auch die entsprechenden Carbonsäureanhydride oder entsprechende Carbonsäureester von niederen Alkoholen zur Herstellung der Polyester verwendet werden.

Die als Polyesteraufbaukomponente zu verwendenden Alkohole sind z. B. Ethylenglykol, Propylenglykol-(1,2) und -(1,3), Butandiol-(1,4), Hexandiol-(1,6), Neopentylglykol, Octandiol-(1,8), 2-Ethylhexandiol-(1,3), 1,4-Bishydroxymethylcyclohexan, Diethylenglykol, Dipropylenglykol, Trimethylolpropan, Glycerin und Pentaerythrit.

Als Polyesteraufbaukomponenten zu verwendende Carbonsäuren sind z. B. Adipinsäure, Bernsteinsäure, Korksäure, Azelainsäure, Sebacinsäure, Phthalsäure, Isophthalsäure, Terephthalsäure, Tetrahydrophthalsäure, Hexahydrophthalsäure, Maleinsäure, Fumarsäure, gesättigte und ungesättigte Fettsäuren wie z. B. Stearinsäure, Ölsäure, Ricinolsäure, Linolsäure, Ricinensäure, Linolensäure, Eläostearinsäure sowie aus natürlichen Ölen wie z. B. Leinöl, Sojaöl, Erdnußöl, Safflaröl, Rizinusöl oder Holzöl gewonnene Fettsäuregemische.

(iii) Gegebenenfalls niedermolekulare Polyole mit Molekulargewichten von 62 bis 300. Beispiele für solche erfindungsgemäß geeigneten Polyole sind Ethandiol, Propandiol-(1,2) und -(1-3), Butandiol-(1,4) und -(1,3), Pentandiole, Hexandiole, Octandiole wie z. B. 2-Ethylhexandiol-(1,3), Trimethylolpropan, Glycerin und Pentaerythrit.

Vertreter der genannten zur Herstellung der erfindungsgemäßen Bindemittel zu verwendenden Polyisocyanat- und Hydroxyl-Verbindungen sind z. B. in High Polymers, Vol. XVI, "Polyurethane Chemistry and Technology", verfaßt von Saunders-Frisch, Interscience Publishers, New York, London, Band I, 1962, S. 32-42 und S. 44-54 und Band II, 1964, S. 5-6 und 198-199, sowie im Kunststoff-Handbuch, Band VII, herausgegeben von Vieweg-Höchtlen, Carl Hanser Verlag, München, 1966, z. B. auf S. 54-71 beschrieben.

(iv) Gegenüber Isocyanaten monofunktionelle Verbindungen, die sich zur reversiblen Blockierung von Isocyanatgruppen eignen und wei sie z. B. bei Z. W. Wicks, Progress in Organic Coatings 9, 3-28 (1981) beschrieben sind. Beispiele solcher zur Herstellung der Komponente (I) der Polyurethanlacke geeigneten Blockierungsmittel sind Lactame wie z. B. Caprolactam, Oxime wie Acetonoxim, Methylethylketonoxim und Cyclohexanonoxim, C-H-acide Verbindungen wie Malonsäureester, Acetessigsäureester und Acetylaceton, Alkohole wie die einfachen Monoalkohole mit 1 bis 4 C-Atomen, 2-Ethylhexanol, Ethylenglykolmonoethylether und Diethylenglykolmonomethylether, Phenole wie Phenol, Kresol und Xylenol sowie heterocyclische Verbindungen wie Triazole, Imidazoline, Imidazole und Tetrahydropyridine.

EP 0 297 396 B1

Die Blockierungsmittel können allein oder als Gemische eingesetzt werden. Bevorzugte Blockierungsmittel sind ε-Caprolactam, Butanonoxim und Malonsäurediethylester.

Die als Polyisocyanate I geeigneten Polyurethan-Prepolymeren (Komponente I) können nach üblichen Verfahren entsprechend dem Stand der Technik hergestellt werden, beispielsweise durch Umsetzung von Polyisocyanaten (i) mit höhermolekularen Polyolen (ii) und niedermolekularen Polyolen (iii), wobei das molare Verhältnis der Isocyanatgruppen des Polyisocyanats (i) zu den Hydroxylgruppen der Polyole (ii) und (iii) von 1,5 bis 3,0 betragen kann. Die resultierenden Polyurethan-Prepolymeren mit freien Isocyanatgruppen werden anschließend zur Blockierung der Isocyanatgruppen mit den dazu geeigneten monofunktionellen Verbindungen (iv) reversibel blockiert Der Aufbau von Polyurethan-Prepolymeren (I) ist beispielsweise in der DE-PS 1 644 813 beschrieben.

Die Komponente I umfaßt sowohl Umsetzungsprodukte aus den Polyisocyanaten (I) und Blockierungsmitteln (iv) als auch blockierte Polyisocyanat-Prepolymere auf Basis der oben genannten Verbindungen (i) und (ii) und/oder (iii).

Bei den mit Isocyanatgruppen reaktionsfähige H-Atome enthaltenden Polymeren (Komponente II) handelt es sich um Polyester- oder Polyether-Polyole, um mehrwertige niedermolekulare Alkohole, Polyamine, Polyepoxypolyole, Polyhydroxylacrylate oder um beliebige Mischungen der genannten Produkte.

Die Polyester-Polyole und Polyether-Polyole sind Verbindungen der in der Polyurethanchemie an sich bekannten Art mit Molekulargewichten von 300 bis 10.000, bevorzugt 300 bis 5.000. Sie werden vorzugsweise aus den oben beschriebenen Aufbaukomponenten (ii) der Polyurethan-Prepolymeren (I) gebildet. Die niedermolekularen Alkohole sind Polyalkohole der bekannten Art mit mindestens 2 Hydroxylgruppen pro Molekül und Molekulargewichten zwischen 62 und 300.

Die in Frage kommenden Polyamine sind vorzugsweise di-oder mehrfunktionelle aliphatische oder cycloaliphatische Amine wie 1,2-Diaminoethan, Tetramethylendiamin, Hexamethylendiamin, Dodecamethylendiamin, 1,4-Diaminocyclohexan, 1,4-Bis-aminomethyl-cyclohexan, "Isophoron"-diamin, 4,4'-Diamino-dicyclohexylmethan, 2,2-Bis-(4-amino-cyclohexyl)-propan oder m- oder p-Xylylendiamin. Besonders bevorzugt ist 4,4'-Diamino-3,3'-dimethyl-dicyclohexylmethan.

Die Komponenten (I) und (II) werden vorzugsweise in solchen Mengen eingesetzt, daß das molare Verhältnis von blockierten Isocyanatgruppen zu Hydroxyl- und/oder Aminogruppen 0,5 bis 2, bevorzugt 0,8 bis 1,5 beträgt.

Unter Polyepoxiden a) bzw. deren Umsetzungsprodukten b) mit $\alpha,\beta$-ethylenisch ungesättigten Mono- und Dicarbonsäuren sind Verbindungen zu verstehen, wie sie weiter oben als haftungsvermittelnde Bestandteile der Formmassen 1 beschrieben worden sind. Unter ihnen werden Polyglycidylether auf Basis von Bisphenol-A sowie ihre Additionsprodukte mit Acryl-, Methacryl-, Malein- und Fumarsäure bevorzugt.

Auch können erfindungsgemäß aus der Lackchemie als Vernetzer bekannte Polyepoxide, wie z.B. Triglycidylisocyanurat oder Triglicidylurazol, eingesetzt werden.

Unter ungesättigten Polyestern c) werden im Rahmen der Definition c) solche Verbindungen verstanden, wie sie weiter oben als Komponente A der Formmassen 1 beschrieben worden sind. Diese ungesättigten Polyester c) werden vorzugsweise styrolfrei eingesetzt. Polyester c) aus Maleinsäureanhydrid, Phthalsäureanhydrid und Propylenglykol sind bevorzugt.

Alternativ hierzu können als ungesättigte Polyester c) auch Veresterungsprodukte $\alpha,\beta$-ethylenisch ungesättigter Monocarbonsäuren (mit vorzugsweise 3 bis 6 C-Atomen) mit Polyhydroxylverbindungen mit mindestens 2 Hydroxylgruppen (und vorzugsweise 2 bis 24 C-Atomen) zum Einsatz kommen. Hierbei ist es unerheblich, ob der Molekülaufbau wirklich durch die Veresterung einer ungesättigten Säure mit einem Polyol oder auf anderem Wege geschieht. Als $\alpha,\beta$-ungesättigte Monocarbonsäuren kommen beispielsweise Acrylsäure, Methacrylsäure, Crotonsäure, Tiglinsäure und ihre Substitutionsprodukte in Betracht. Bevorzugt werden Acryl- und Methacrylsäure. Als Beispiele für Polyole seien genannt: aliphatische und cycloaliphatische Diole wie (gegebenenfalls verzweigte) $\alpha,\omega$-Dihydroxyalkane, Polyhydroxyalkane, Perhydrierungsprodukte mehrwertiger Phenole wie Perhydro-bisphenol-A; Polyalkylenglykole wie (gegebenenfalls verzweigte) Polyethylen- und Polypropylenglykole; Additionsprodukte von Alkylenoxiden, bevorzugt Ethylen- oder Propylenoxid, an mehrwertige aromatische oder gesättigte aliphatische Carbonsäuren wie Isophthalsäure, Trimellithsäure oder Adipinsäure, oder an mehrwertige Phenole wie Bisphenol-A. Als in diese Gruppe fallende Polyester, deren Molekülaufbau nur formal durch Veresterung einer $\alpha,\beta$-ethylenisch ungesättigten Monocarbonsäure mit einem Diol zustandekommt, seien die Additionsprodukte aus Polyisocyanaten und Mono-(meth-)acrylsäureestern von Glykolen genannt, z. B. das Additionsprodukt aus 2,4-Toluylendiisocyanat und Hydroxypropylmethacrylat.

Bevorzugte Vertreter der alternativ genannten Gruppe von Polyestern c) haben Molekulargewichte zwischen ca. 250 und ca. 2.000. Besonders bevorzugt werden die Acrylate und Methacrylate der Ethoxylierungs- und Propoxylierungsprodukte von Bisphenol-A.

8

Erfindungsgemäß einzusetzende Bleche sind auch solche, die aus zwei oder mehreren Schichten verschiedener metallischer Werkstoffe oben genannter Art (gleicher oder unterschiedlicher Dicke) bestehen. Beispiele hierfür sind verzinkte Stahlbleche, Bimetall- oder Sandwichbleche. Auch können mit anorganischen Schichten versehene Bleche eingesetzt werden.

Die ungesättigten Polyester c) können in üblichen Lackmitteln, wie Butylacetat oder Benzin, gelöst sein. Außerdem können die Lacke übliche Zusätze wie Füllstoffe, Pigmente und Hilfmittel enthalten.

Herstellung der Blech-Duroplast-Verbundteile

Die Hertstellung der erfindungsgemäßen Verbundteile erfolgt durch
1. Beschichten des Metalls mit zumindest einer Lackschicht der oben definierten Zusammensetzung.
2. Verformen des beschichteten Metallblechs.
3. Aufformen der Formmasse 1 auf das geformte Blech in einem beheizten Preß- oder Spritzgießwerkzeug.

Es können 0,02 bis 2,0 mm, vorzugsweise 0,1 bis 1 mm, besonders bevorzugt 0,1 bis 0,5 mm starke Bleche verwendet werden. Bevorzugt werden Bleche aus Aluminium oder Stahl, jedoch können erfindungsgemäß auch solche aus Edelmetallen, Legierungen oder anderen kalt verformbaren metallischen Werkstoffen eingesetzt werden.

Normalerweise werden sie nach den üblichen Verfahren des Standes der Technik vorbehandelt, z. B. durch Passivieren, Chromatieren, Zinkphosphatieren oder durch Auftragen von Wasch-Primern in dünnen Schichten. Besonders bevorzugt sind phosphatierte und passivierte Stahl- sowie chromatierte Aluminiumbleche.

Die Einbrennlacke entsprechend der obigen Beschreibung werden vorzugsweise im Coil-Coating-Verfahren auf das Blech aufgebracht und je nach ihrer chemischen Zusammensetzung bei Metalltemperaturen zwischen 100 und 280°C, vorzugsweise zwischen 140 und 260°C, eingebrannt.

Nach der Beschichtung werden die Metallbleche in üblicher Weise formgebend verarbeitet. Bevorzugtes Verfahren ist hierbei die Formgebung in einer Tiefziehpresse; jedoch läßt sich das erfindungsgemäße Verfahren auch auf Blechteile anwenden, die nach anderen Verfahren, z. B. durch Walzen, geformt sind.

Das Aufbringen der Formmasse 1 geschieht in beheizten Formwerkzeugen, wie sie in der Verarbeitungstechnik für ungesättigte Polyesterharze üblich sind, vorzugsweise solchen aus Stahl, durch Aufpressen oder nach dem Spritzgießverfahren bei Temperaturen zwischen 60 und 200°C, vorzugsweise zwischen 80 und 180°C, besonders bevorzugt zwischen 120 und 170°C.

Beispiele

Bei den Prozentangaben handelt es sich im folgenden, soweit nichts anderes vermerkt ist, um Gewichtsprozente; Teile bedeuten Gewichtsteile.

Die Herstellung der flächigen (SMC) und teigartigen (BMC) Formmassen wurde in üblicher Weise durchgeführt (wie z. B. beschrieben im Kunststoff-Handbuch Band VIII "Polyester", herausgegeben von R. Vieweg und L. Goerden, Carl Hanser Verlag, München, 1973, S. 482 ff. und 491 ff.).

Das Hinterpressen mit Polyesterharz-Formmasse geschah mittels einer 200-to-Presse in einem Plattenwerkzeug mit den Abmessungen 200 • 300 mm. Man legte 0,3 mm starke Blechstreifen von 3 cm Breite und ca. 19 cm Länge in das auf 150°C geheizte Werkzeug, brachte die notwendige Menge Formmasse ein und verpreßte 90 sec. lang zu einer 2 mm dicken Platte.

Die Haftung zwischen Blech und Kunststoff wurde entweder durch den Rollenschälversuch nach DIN 53289 oder subjektiv bestimmt. Im letzteren Fall wurde der Blechstreifen an einer Ecke mit einem Messer gelockert und mit einer Zange abgezogen. Die Beurteilung erfolgte nach einer 5-Noten-Skala, wobei
Note 1 bedeutet: sehr starke Haftung; das abgerissene Blech ist zu mindestens 50 % mit anhaftender gehärteter Formmasse bedeckt;
Note 5 bedeutet: keine Haftung.

Polyesterharz-Formmassen

Es wurden in üblicher Weise (s. z. B. Kunststoff-Handbuch, Band VIII "Polyester", herausgegeben von R. Vieweg und L. Goerden, Carl Hanser Verlag, München 1973, S. 482 ff. und 491 ff.) Harzmatten nach den in der Tabelle angegebenen Rezepturen (Mengenangaben in Gewichtsteilen) hergestellt. Ihr Glasfasergehalt betrug 25 % (Schnittlänge 26/26/52 mm). Die Harzmatten wurden zur Reifung bei 23°C gelagert und nach Erreichen der Verpreßbarkeit in der oben beschriebenen Weise verpreßt, wobei jeweils 4 vorbehandelte Blechstreifen in das Werkzeug eingelegt wurden und die Werkzeugtemperatur 150°C betrug. Zur Beurteilung der Haftung wurden jeweils 8 Streifen von Hand abgezogen. Gegebenenfalls wurde an weiteren 8 Streifen der Rollschälversuch nach DIN 53 289 zur Bestimmung der Schälfestigkeit durchgeführt.

|  | SMC 1 | SMC 2 | SMC 3 |
|---|---|---|---|
| UP-Harz (s. u.) | 56,0 | 39,2 | 39,2 |
| LP-Additiv (s. u.) | 24,0 | 24,0 | 24,0 |
| Diacrylat (s. u.) | - | 16,8 | - |
| Bis-epoxid (s. u.) | - | - | 16,8 |
| Polyvinylacetatlösung (s. u.) | 10,0 | 10,0 | 10,0 |
| Styrol | 10,0 | 10,0 | 10,0 |
| Netzmittel | 2,7 | 2,7 | 2,7 |
| tert. Butyl-perbonzoat | 1,4 | 1,4 | 1,4 |
| p-Benzochinon (10 % in Styrol) | 0,6 | 0,6 | 0,6 |
| Cobaltnaphthenatlösung (1 % Co) | 1,0 | 1,0 | 1,0 |
| Zinkstearat | 5,0 | 5,0 | 5,0 |
| Kreide | 175 | 175 | 175 |
| MgO-Paste (35 %ige Anreibung in Trägerharz) | 2,9 | 2,9 | 2,9 |

In der Tabelle bedeuten

UP-Harz die 65-prozentige styrolische Lösung eines ungesättigten Polyesters auf Basis Maleinsäureanhydrid/Propylenglykol-1,2. Die Säurezahl des. 100 %igen Polyesters betrug 20, die Viskosität der styrolischen Lösung 1.600 mPa.sec bei 20°C;

LP-Additiv die 70-prozentige styrolische Lösung eines gesättigten Polyesters auf Basis Adipinsäure-Ethylenglykol/Propylenglykol-1,2 im Molverhältnis 1:0,6:0,4. Die Säurezahl des 100-prozentigen Polyesters betrug 11, die Viskosität der styrolischen Lösung 1.400 mPa.sec bei 20°C;

Diacrylat die 80-prozentige styrolische Lösung des Umsetzungsproduktes aus 2 Molen Methacrylsäure und einem Mole eines handelsüblichen Epoxidharzes auf Basis Bisphenol-A mit einem Epoxid-Äquivalent nach DIN 16 945 von 185 bis 200 (®Lekutherm X 20 der Bayer AG);

Bis-Epoxid die 80-prozentige styrolische Lösung des oben genannten handelsüblichen Epoxidharzes;

Polyvinylacetatlösung eine 40-prozentige styrolische Polyvinylacetatlösung mit einer Säurezahl von 3 und einer Viskosität von 5.000 mPa.sec bei 23°C.

Coil-Coating-Lacke

Komponente 1

$\epsilon$-Caprolactam-blockiertes NCO-Prepolymer auf Basis von 2,4-Toluylendiisocyanat, einem auf Propandiol-1,2 gestarteten Propylenoxid-polyether mit einer Funktionalität von 2, einem mittleren Molekulargewicht $\overline{M}_n$ von 1.000 und einer OH-Zahl von 112, Trimethylolpropan und Diethylenglykol, 65-prozentig gelöst in Ethylenglykolacetat/Xylol (1 : 1 Gewichtsteile). Der Gehalt an verkappten NCO-Gruppen betrug 4,6 %.

Komponente 2

$\epsilon$-Caprolactam-blockiertes NCO-Prepolymer auf Basis von 2,4-Toluylendiisocyanat, Trimethylolpropan, Butandiol-1,3, einem auf Bisphenol-A gestarteten Propylenoxid-Polyether mit einer Funktionalität von 2 und einer OH-Zahl von 200, einem Polyester auf Basis von Adipinsäure und Diethylenglykol mit einer Funktionalität von 2 und einer OH-Zahl von 42, 70-prozentig gelöst in Ethylenglykolacetat/Xylol (1:1 Gewichtsteile). Der Gehalt an verkappten NCO-Gruppen betrug 16 %.

Komponente 3

Ungesättigter Polyester auf Basis von Maleinsäureanhydrid, Phthalsäureanhydrid und Propylenglykol mit einer Säurezahl von 12, 75-prozentig gelöst in Butylacetat.

Komponente 4

Di-methyacrylat des ethoxylierten Bisphenols-A mit einem Gehalt an ethylenisch ungesättigten Gruppen von 3,8 mVal/g.

Komponente 5

Diacrylat auf Basis Bisphenol-A, identisch mit dem styrolfreien Anteil des weiter oben als "Diacrylat" beschriebenen Produkts, 75-prozentig gelöst in Butylacetat.

Komponente 6

Handelsübliches Epoxidharz wie oben als Ausgangsprodukt für "Diacrylat" beschrieben (®Lekutherm X 20 der Bayer AG), 75-prozentig gelöst in Butylacetat.

Hydroxylgruppenhaltiger Polyester I

Polyfunktioneller hydroxylgruppenhaltiger Polyester auf Basis Phthalsäureanhydrid, Maleinsäureanhydrid, Adipinsäure, Trimethylolpropan und Propandiol-1,2 mit einem mittleren Molekulargewicht $\overline{M}_n$ von 960 und einer OH-Zahl von 165.

Hydroxylgruppenhaltiges Polyester-Polyether-Gemisch II

Gemisch eines auf Bisphenol-A gestarteten Propylenoxid-Polyethers mit einer Funktionalität von 2 und einer OH-Zahl von 200 und eines Polyesters auf Basis von Adipinsäure, Isophthalsäure, Hexandiol und Trimethylolpropan, OH-Zahl 400, 70-prozentig in Ethylglykolacetat/Xylol (1:1).

| Haftlacke | | | | | | |
|---|---|---|---|---|---|---|
| | Vergleich | | | | | |
| | H1 | H2 | H3 | H4 | H5 | H6 |
| Polyester-Polyether-Gemisch II | 24,7 | 24,7 | 24,7 | 24,7 | 24,7 | 24,7 |
| Komponente 2 | 33,0 | 33,0 | 33,0 | 33,0 | 33,0 | 33,0 |
| Komponente 4 | 11,5 | 5,8 | - | - | - | - |
| Komponente 3 | - | 7,7 | 15,3 | - | - | - |
| Komponente 5 | - | - | - | 15,3 | - | - |
| Komponente 6 | - | - | - | - | 15,3 | - |
| Netzmittel | 0,2 | 0,2 | 0,2 | 0,2 | 0,2 | 0,2 |
| Silicagel | 0,6 | 0,6 | 0,6 | 0,6 | 0,6 | 0,6 |
| Titandioxid | 7,3 | 7,3 | 7,3 | 7,3 | 7,3 | 7,3 |
| Magnetit | 0,4 | 0,4 | 0,4 | 0,4 | 0,4 | 0,4 |
| Ruß | 0,1 | 0,1 | 0,1 | 0,1 | 0,1 | 0,1 |
| Ethylglykolacetat | 4,0 | 4,0 | 4,0 | 4,0 | 4,0 | 4,0 |
| Butylacetat | 0,7 | 0,7 | 0,7 | 0,7 | 0,7 | 0,7 |
| Xylol | 4,5 | 2,5 | 0,7 | 0,7 | 0,7 | 0,7 |

Harze, Pigmente und Zusatzstoffe (Mengenangaben in Gewichtsteilen) wurden auf übliche Weise angerieben. Die Lacke wurden durch Verdünnen mit Lösungsmittel (Solventnaphtha 200) auf eine Viskosität entsprechend einer Auslaufzeit von 100 Sekunden (DIN 53 211, DIN-Becher 4) eingestellt.

EP 0 297 396 B1

| Korrosionsschutzgrundierungen | | | |
|---|---|---|---|
| | KS1 | KS2 | KS3 |
| Komponente 1 | 33,5 | 34,4 | 31,9 |
| OH-Gruppen-haltiger Polyester I | 12,0 | 12,1 | 11,4 |
| 4,4'-Diamino-3,3'-dimethyldicyclohexylmethan | - | - | 4,8 |
| Netzmittel, 10-%ig, in Solventnaphtha 100 | - | - | 1,3 |
| Bentonit, 10-%ig in Solventnaphtha 100/Antiterra U(85:5) | 3,4 | 3,5 | 3,2 |
| Zinkchromat | 15,2 | 15,6 | - |
| Mikrotalk | 13,1 | - | 12,9 |
| Blanc Fixe Micro | - | 12,1 | - |
| Blanc Fixe F | - | - | 14,5 |
| Eisenoxidschwarz | - | - | 3,2 |
| Titandioxid | 13,5 | 3,5 | - |
| Ruß | 1,7 | - | - |
| Entschäumer auf Polyesterbasis | 2,2 | 0,4 | - |
| Solventnaphtha 200 | 15,1 | 18,2 | - |
| Verdünnung mit SN 200 auf Applikationsviskosität (DIN-Becher 4) | 70sec | 100sec | 70sec |
| Schichtdicke in $\mu$m (Trockenfilm) ca. | 20 | 5 | 10 |

Blechmaterialien

Alle hier beschriebenen Versuche wurden mit Blechen von 0,3 mm Dicke durchgeführt. Folgende Typen kamen zum Einsatz:
S1:     unbehandelter und entfetteter Stahl;
S2:     galvanisch verzinkter Stahl;
S3:     zinkphosphatierter Stahl;
S4:     passivierter Stahl;
S5:     galvanisch verzinkter, passivierter Stahl,
Al1:     chromatiertes Aluminium und
Al2:     unbehandeltes Aluminium.

Herstellung der lackierten Bleche

Auf die verschieden vorbehandelten Bleche wurde die Korrosionsschutzgrundierung aufgetragen. Man ließ 10 Minuten lang ablüften und brannte dann ein (Metalltemperatur PMT 241°C). Danach wurde der Haftlack appliziert und nach 10 Minuten Ablüftzeit eingebrannt (PMT 241°C).
Der Aufbau der Coil-Coating-Lackschichten geht aus der folgenden Tabelle hervor.
(PMT = peak metal temperature)

**Aufbau der Lackschichten**

| | A | B | C | D | E | F | G | H | I | K | L | M | N | O |
|---|---|---|---|---|---|---|---|---|---|---|---|---|---|---|
| Blechmaterial | S1 | S2 | S3 | S4 | S4 | AL | S1 | S5 | S5 | S5 | S5 | S5 | AL1 | AL2 |
| Korrosionsschutzgrundierung | - | KS3 | KS2 | KS2 | KS2 | KS2 | KS3 | KS2 | KS2 | KS2 | KS2 | KS2 | KS2 | KS |
| Schichtstärke (μm) | - | 10 | 5 | 5 | 5 | 5 | 5 | 5 | 5 | 5 | 5 | 5 | 5 | 5 |
| Haftlack | - | - | H1 | H2 | H3 | H3 | H1 | H6 | H5 | H4 | H3 | H2 | H5 | H2 |
| Schichtstärke (μm) | - | - | 20 | 20 | 20 | 20 | 20 | 20 | 20 | 20 | 20 | 20 | 20 | 20 |
| Korrosionsschutzgrundierung Rückseite | - | - | KS1 | KS1 | KS1 | KS1 | KS1 | KS1 | KS1 | KS1 | KS1 | KS1 | KS1 | |
| Schichtstärke (μm) | - | - | 20 | 20 | 20 | 20 | 20 | 20 | 20 | 20 | 20 | 20 | 20 | - |

Messungen an beschichteten Blechen:

Auf die vorbereiteten Blechstreifen wurden SMC-Formmassen wie weiter oben beschrieben aufgeformt. Die folgenden Beispiele geben die Ergebnisse der Haftungsprüfung wieder.

Beispiele 1 bis 9 (Vergleichsbeispiele)

| Beschichtet wurde mit SMC 1. | | |
|---|---|---|
| Versuch Nr. | Vorbehandeltes Blech | Haftung (Handversuch) |
| 1 | A | 5 |
| 2 | B | 5 |
| 3 | C | 5 |
| 4 | E | 4-5 |
| 5 | G | 5 |
| 6 | F | 4-5 |
| 7 | H | 5 |
| 8 | I | 4 |
| 9 | O | 5 |

Beispiele 10 bis 21

**Beschichtet wurde mit SMC 2.**

| Versuch Nr. | Vorbehandeltes Blech | Haftung (Handversuch) | Schälwiderstand [N/qmm] |
|---|---|---|---|
| 10 (Vergl. Vers.) | A | 5 | n.m.[1] |
| 11 | D | 2 | n.g.[2] |
| 12 | E | 2-3 | n.g. |
| 13 | F | 2-3 | 0,51 |
| 14 | G | 2 | 1,20 |
| 15 (Vergl. Vers.) | H | 4-5 | n.m. |
| 16 | I | 1 | 1,57 |
| 17 | K | 1-2 | 1,29 |
| 18 | L | 2-3 | 0,58 |
| 19 | M | 2 | n.g. |
| 20 | N | 2 | 0,84 |

n.m.[1]: nicht meßbar (Blechstreifen löst sich beim Abheben einer Ecke von der Beschichtung).

n.g.[2]: nicht gemessen.

14

EP 0 297 396 B1

Beispiele 22 bis 31

| Beschichtet wurde mit SMC 3. | | | |
|---|---|---|---|
| Versuch Nr. | Vorbehandeltes Blech | Haftung (Handversuch) | Schälwiderstand [N/qmm] |
| 22 (Vergl. Vers.) | A | 5 | n.m.[1] |
| 23 (Vergl. Vers.) | B | 4 | n.g.[1] |
| 24 | D | 2 | n.g. |
| 25 | E | 2-3 | 0,58 |
| 26 | F | 2-3 | 1,03 |
| 27 | G | 1-2 | 0,99 |
| 28 (Vergl. Vers.) | H | 4 | 0,24 |
| 29 | I | 1 | 1,29 |
| 30 | K | 1 | 1,65 |
| 31 | N | 2-3 | 0,60 |
| [1]siehe Anmerkung [1] unter Beispielen 10-21 | | | |

**Patentansprüche**

1. Verfahren zur Herstellung von Blech-Duroplast-Verbundteilen aus korrosionsgeschütztem Blech und einer Formmasse auf Basis von ungesättigtem Polyesterharz, wobei die Formmasse nach der Formgebung des Bleches auf dieses durch Aufpressen und Härten bei erhöhter Temperatur in einem Arbeitsgang aufgebracht wird, dadurch gekennzeichnet, dass

1. das der Formmasse zugrundeliegende ungesättigte Polyesterharz Polyepoxide in einer Menge entsprechend 5 bis 200 mMol Epoxidgruppen pro 100 g organisches Bindemittel der Formmasse, und/oder deren Umsetzungsprodukte mit $\alpha,\beta$-ethylenisch ungesättigten, unter Härtungsbedingungen copolymerisierbaren Mono- oder Dicarbonsäuren zugemischt enthält, wobei diese Mono- und Dicarbonsäuren Molekulargewichte unter 800 besitzen, und

2. das Blech durch eine Einbrennlackierung korrosionsgeschützt ist und auf der Seite, auf welche die Polyesterharzformmasse aufgebracht wird, eine eingebrannte haftvermittelnde Beschichtung trägt, die

a) Polyepoxide in einer Menge entsprechend 5 bis 200 mVal Epoxidgruppen pro 100 g organisches Bindemittel dieser Beschichtung, und/oder

b) Umsetzungsprodukte der Polyepoxide a) mit $\alpha,\beta$-ethylenisch ungesättigten, unter Härtungsbedingungen copolymerisierbaren Mono-oder Dicarbonsäuren, wobei diese Mono- bzw. Dicarbonsäuren Molekulargewichte unter 800 besitzen und/oder

c) 2,5 bis 50 Gew.-%, bezogen auf organisches Bindemittel dieser Beschichtung, ungesättigten Polyester mit 0,1 bis 0,6 Äquivalenten copolymerisierbarer ethylenischer Doppelbindungen pro 100 g ungesättigtem Polyester c)

enthält.

2. Verfahren nach Anspruch 1, dadurch gekennzeichnet, daß die Menge Polyepoxid für das ungesättigte Polyesterharz der Formmasse 1 einer Menge von 15 bis 110 mMol Epoxidgruppen pro 100 g organisches Bindemittel der Formmasse entspricht.

3. Verfahren nach Ansprüchen 1 und 2, dadurch gekennzeichnet, daß die Menge Polyepoxid für das ungesättigte Polyesterharz der Formmasse 1 einer Menge von 35 bis 90 mMol Epoxidgruppen pro 100 g Bindemittel der Formmassen entspricht.

4. Verfahren nach Ansprüchen 1-3, dadurch gekennzeichnet, daß die Menge Polyepoxid für die haftvermittelnde Beschichtung auf dem Blech 2 einer Menge von 10 bis 120 mVal Epoxidgruppen pro 100 g organisches Bindemittel dieser Beschichtung entspricht.

15

**5.** Verfahren nach Ansprüchen 1-4, dadurch gekennzeichnet, daß die Menge Polyepoxid für die haftvermittelnde Beschichtung auf dem Blech 2 einer Menge von 10 bis 80 mVal Epoxidgruppen pro 100 g organisches Bindemittel dieser Beschichtung entspricht.

**6.** Verfahren nach Ansprüchen 1-5, dadurch gekennzeichnet, daß 5 bis 40 Gew.-% Komponente c) eingesetzt werden.

**7.** Verfahren nach Ansprüchen 1-6, dadurch gekennzeichnet, daß 5 bis 30 Gew.-% Komponente c) eingesetzt werden.

**8.** Verfahren nach Ansprüchen 1-7, dadurch gekennzeichnet, daß die Komponente c) 0,2 bis 0,4 Äquivalente copolymerisierbarer ethylenischer Doppelbindungen pro 100 g Komponente c) enthält.

**9.** Nach Verfahren gemäß Ansprüchen 1-8 hergestellte Verbundteile.

**10.** Verwendung der Verbundteile gemäß Anspruch 9 beim Bau von Fahrzeugen.

## Claims

**1.** Process for the production of sheet metal/thermoset composite parts from corrosion-protected sheet metal and a moulding compound based on unsaturated polyester resin, wherein the moulding compound, after shaping of the sheet metal, is applied thereto by compression moulding and curing at elevated temperature in one operation, characterised in that,

1. the unsaturated polyester resin on which the moulding compound is based contains incorporated into it polyepoxides in an amount corresponding to 5 to 200 mmol of epoxide groups per 100 g of organic binder in the moulding compound, and/or the reaction products thereof with $\alpha,\beta$-ethylenically unsaturated mono- or dicarboxylic acids which are copolymerisable under curing conditions, wherein these mono- and dicarboxylic acids have molecular weights below 800, and

2. the sheet metal is corrosion-protected by a baked lacquer finish and bears, on the side on which the polyester resin moulding compound is applied, a baked coupling coating which contains

a) polyepoxides in an amount corresponding to 5 to 200 milligram-equivalents of epoxide groups per 100 g of organic binder in this coating and/or,

b) reaction products of the polyepoxides a) with $\alpha,\beta$-ethylenically unsaturated mono- or dicarboxylic acids which are copolymerisable under curing conditions, wherein these mono-and dicarboxylic acids have molecular weights below 800, and/or

c) 2.5 to 50 wt.%, related to the organic binder in this coating, of unsaturated polyesters with 0.1 to 0.6 equivalents of copolymerisable ethylenic double bonds per 100 g of unsaturated polyester c).

**2.** Process according to claim 1, characterised in that the amount of polyepoxide for the unsaturated polyester resin in the moulding compound 1 corresponds to an amount of 15 to 110 mmol of epoxide groups per 100 g of organic binder in the moulding compound.

**3.** Process according to claims 1 and 2, characterised in that the amount of polyepoxide for the unsaturated polyester resin in the moulding compound 1 corresponds to an amount of 35 to 90 mmol of epoxide groups per 100 g of organic binder in the moulding compounds.

**4.** Process according to claims 1-3, characterised in that the amount of polyepoxide for the coupling coating on the sheet metal 2 corresponds to an amount of 10 to 120 milligram-equivalents of epoxide groups per 100 g of organic binder in this coating.

**5.** Process according to claims 1-4, characterised in that the amount of polyepoxide for the coupling coating on the sheet metal 2 corresponds to an amount of 10 to 80 milligram-equivalents of epoxide groups per 100 g of organic binder in this coating.

**6.** Process according to claims 1-5, characterised in that 5 to 40 wt.% of component c) are used.

**7.** Process according to claims 1-6, characterised in that 5 to 30 wt.% of component c) are used.

8. Process according to claims 1-7, characterised in that component c) contains 0.2 to 0.4 equivalents of copolymerisable ethylenic double bonds per 100 g of component c).

9. Composite parts produced according to claims 1-8.

10. Use of composite parts according to claim 9 in vehicle construction.

**Revendications**

1. Procédé de préparation de produits stratifiés tôlerésine thermodurcissable constitués d'une tôle protégée contre la corrosion et d'une masse à mouler à base de résine polyester insaturée, dans lequel la masse à mouler après façonnage de la tôle est déposée dessus par pressage et durcissement à température augmentée en une opération, caractérisé en ce que
   1°) la résine polyester insaturée à la base de la masse à mouler contient des polyépoxydes en une quantité correspondant a 5 à 200 mMol de groupes époxydes pour 100 g de liant organique de la masse à mouler, et/ou leurs produits de réaction mélangé à des acides mono- ou dicarboxyliques $\alpha$, $\beta$-éthyléniquement insaturés, copolymérisables dans les conditions de durcissement, ces acides mono- et dicarboxyliques ayant des poids moléculaires inférieurs à 800, et
   2°) la tôle est protégée contre la corrosion par un vernis séchant au four et porte, du côté sur lequel la masse à mouler de résine polyester est déposée, un enduit facilitant l'adhérence passé au feu, qui contient
      a) des polyépoxydes en une quantité correspondant à 5 à 200 mVal de groupes époxydes pour 100 g de liant organique de cette couche, et/ou
      b) des produits de réaction des polyépoxydes a) avec des acides mono- ou dicarboxyliques $\alpha$, $\beta$-éthyléniquement insaturés, copolymérisables dans les conditions de durcissement, ces acides mono- ou dicarboxyliques ayant des poids moléculaires inférieurs à 800 et/ou
      c) de 2,5 à 50% en poids, par rapport au liant organique de cet enduit, de polyesters insaturés avec de 0,1 à 0,6 équivalent de doubles liaisons éthyléniques copolymérisables pour 100 g de polyester c) insaturé.

2. Procédé selon la revendication 1, caractérisé en ce que la quantité de polyépoxyde pour la résine polyester insaturée de la masse à mouler 1 correspond à une quantité de 15 à 110 mMol de groupes époxydes pour 100 g de liant organique de la masse à mouler.

3. Procédé selon les revendications 1 et 2, caractérisé en ce que la quantité de polyépoxyde pour la résine polyester insaturée de la masse à mouler 1 correspond à une quantité de 35 à 90 mMol de groupes époxydes pour 100 g de liant des masses à mouler.

4. Procédé selon les revendications 1-3, caractérisé en ce que la quantité de polyépoxyde pour l'enduit facilitant l'adhérence sur la tôle 2 correspond à une quantité de 10 à 120 mVal de groupes époxydes pour 100 g de liant organique de cet enduit.

5. Procédé selon les revendications 1-4, caractérisé en ce que la quantité de polyépoxyde pour l'enduit facilitant l'adhérence sur la tôle 2 correspond à une quantité de 10 à 80 mVal de groupes époxydes pour 100 g de liant organique de cet enduit.

6. Procédé selon les revendications 1-5, caractérisé en ce qu'on utilise de 5 à 40% en poids de composant c).

7. Procédé selon les revendications 1-6, caractérisé en ce qu'on utilise de 5 à 30% en poids de composant c).

8. Procédé selon les revendications 1-7, caractérisé en ce que le composant c) contient de 0,2 à 0,4 équivalent de doubles liaisons éthyléniques copolymérisables pour 100 g de composant c).

9. Produits stratifiés préparés conformément au procédé selon les revendications 1-8.

10. Application des produits stratifiés selon la revendication 9 à la construction des véhicules.